# EUROPÄISCHE PATENTSCHRIFT

(11) **EP 0 893 310 B1**
(45) Veröffentlichungstag und Bekanntmachung des Hinweises auf die Patenterteilung: **04.09.2002**
(21) Anmeldenummer: 98112819.2
(22) Anmeldetag: 10.07.1998
(51) Int. Cl.: B60R 21/09

(54) **Pedalanordnung in einem Kraftfahrzeug**
Pedal arrangement in a motor vehicle
Agencement de pédale dans un véhicule automobile

(30) Priorität: 23.07.1997 DE 19731644
(43) Veröffentlichungstag der Anmeldung: 27.01.1999
(73) Patentinhaber: DaimlerChrysler AG, 70567 Stuttgart (DE)
(72) Erfinder: Müller, Martin, 73770 Denkendorf (DE); Wolpert, Engelbert, 70176 Stuttgart (DE)

(56) Entgegenhaltungen:
- EP-A- 0 719 697
- EP-A- 0 788 931
- DE-A- 4 409 235
- DE-A- 19 645 200
- DE-U- 9 419 505
- PATENT ABSTRACTS OF JAPAN vol. 097, no. 005, 30. Mai 1997 & JP 09 011826 A (MITSUBISHI MOTORS CORP), 14. Januar 1997

## Beschreibung

Die Erfindung betrifft ein Kraftfahrzeug mit zwei Vorbaulängsträgern, die in einem Anbindungsbereich kraftübertragend mit einer deformierbaren Stirnwand verbunden sind, die sich von einem deformationssteifen Brüstungsquerträger unterhalb einer Windschutzscheibe bis in einen Fußraum eines Fahrgastraumes nach unten erstreckt, und mit einer Pedalanordnung, deren Pedale mittels wenigstens eines Lagerbockes schwenkbeweglich gelagert sind, wobei der wenigstens eine Lagerbock oberhalb des Anbindungsbereiches der Vorbaulängsträger stirnwandseitig festgelegt ist, sowie mit Mitteln zur gezielten Führung wenigstens eines Pedales bei einem Fahrzeugaufprall.

Ein solches Kraftfahrzeug ist aus der DE 195 22 398 C1 bekannt. Um zu verhindern, daß bei einem Fahrzeugaufprall ein Mantelrohr der Lenkunganordnung sich kurzzeitig aufbäumt, sind am Pedalwerk Abweismittel angeordnet, durch welches das Pedalwerk bei crashbedingter Rückverlagerung gezielt abgelenkt wird. Eine Ausrichtung der Abweismittel wird durch eine Bewegungskopplung mit einem Bremspedal des Pedalwerkes erzielt.

Kraftfahrzeuge sind zudem in Form von Personenkraftwagen allgemein bekannt. Eine Vorbaustruktur eines solchen Personenkraftwagens weist zwei Vorbaulängsträger auf, die rückseitig kraftübertragend an eine Stirnwand angeschlossen sind, die einen Fahrgastraum von einem Motorraum trennt. Die Stirnwand erstreckt sich über die Breite des Fahrgastraumes und verläuft von einem Brüstungsquerträger unterhalb einer Windschutzscheibe ausgehend gewölbt nach unten bis in einen Fußraum des Fahrgastraumes. Dort ist sie mit einer Bodenstruktur des Fahrgastraumes verbunden. An der stirnwand ist eine Pedalanordnung, insbesondere ein Kupplungspedal und ein Bremspedal, in jeweils hängender Anordnung gelagert. Dazu ist ein gemeinsamer Lagerbock vorgesehen, der unterhalb des Brüstungsquerträgers, jedoch oberhalb des Anbindungsbereiches der Vorbaulängsträger an der Stirnwand festgelegt ist. An dem Lagerbock sind die Pedale schwenkbeweglich gelagert.

Bei einem Frontalaufprall des Kraftfahrzeugs wird die Aufprallenergie über die Vorbaulängsträger in die Stirnwand eingeleitet, wodurch diese in den Fahrgastraum hinein deformiert wird. Durch diese Deformation ergibt sich zwangsläufig eine Kippbewegung des Lagerbockes um eine imaginäre, horizontal in Fahrzeugquerrichtung verlaufende Kippachse in unmittelbarer Nähe des deformationssteifen Brüstungsquerträgers - auf die normale Fahrtrichtung bezogen - nach hinten und nach oben. Dadurch werden auch die Pedale entsprechend nach hinten und nach oben verschwenkt, wodurch sie derart in den Fußraum hineinragen, daß Verletzungen des Fahrers des Kraftfahrzeugs in dessen Bein- und Fußbereichen auftreten können.

Um hier Abhilfe zu schaffen, ist es aus der gattungsgemäßen DE 28 41 988 A insbesondere für eine Bremspedalanordnung bei einem Personenkraftwagen bekannt, den Stirnwandbereich des Personenkraftwagens derart zu gestalten, daß ein Bremskraftverstärker einschließlich des mit diesem verbundenen Bremspedales bei einem Frontalaufprall eine Schwenkbewegung nach unten vollführt. Hierzu ist eine gezielte Formgebung der Stirnwand notwendig.

Eine ähnliche Pedalanordnung ist aus der DE 44 15 642 A1 bekannt. Um auch dort eine entsprechend nach unten erfolgende Kippbewegung des Bremskraftverstärkers einschließlich des mit diesem verbundenen Bremspedales zu bewirken, ist in einer Stirnwand ein Sollknickbereich vorgesehen.

Schließlich ist in der DE 195 15 852 A1 auch noch eine Bremspedalanordnung offenbart, bei der eine Betätigungsstange, die das Bremspedal mit dem Bremskraftverstärker verbindet, bei einer entsprechenden Frontalaufprallbelastung im Bereich einer Sollbruchstelle bricht, wodurch das Bremspedal von der entsprechenden Schwenkbewegung des Bremskraftverstärkers durch eine Deformation der Stirnwand abgekoppelt wird. Alternativ ist in der DE 195 15 852 A1 eine Bremspedalanordnung beschrieben, bei der die Schwenkbewegung des Bremspedales im Falle eines Fahrzeugaufpralles mittels eines pyrotechnisch wirksamen Stellgliedes unterstützt wird.

Aus der DE 34 13 030 C2 ist es auch bekannt, eine in einem Fußraum befindliche Fußfeststellbremse eines Kraftfahrzeuges bei einer unfallbedingten Verformung der Stirnwand aus dem Fußraum herauszuschwenken. Dabei ist die Fußfeststellbremse an einer Grundplatte angeordnet, die im Verbindungsbereich einer Stirnwand mit einer Stirnwandsäule befestigt ist und deren Befestigungspunkte sich bei der unfallbedingten Verformung der Stirnwand teilweise lösen.

Die JP 06286659 A offenbart eine Pedalanordnung für ein Kraftfahrzeug, deren Pedale bei einem Fahrzeugaufprall nach vorne verschwenkt werden.

Aufgabe der Erfindung ist es, ein Kraftfahrzeug der eingangs genannten Art zu schaffen, das ohne spezielle Stirnwandformgebungen mit einfachen Mitteln die Verletzungsgefahren für einen Fahrer in einem Fußraum des Fahrgastraumes reduziert.

Diese Aufgabe wird dadurch gelöst, daß wenigstens ein Pedal mit einem - in normaler Fahrtrichtung gesehen - nach hinten abragenden Stützfortsatz versehen ist, der derart mit einer korrespondierenden Anschlagfläche an einem in Abstand hinter dem wenigstens einen Lagerbock angeordneten, karosseriefesten Querträger in Wirkverbindung steht, daß bei einer Deformation der Stirnwand und einer daraus resultierenden Kippbewegung des Lagerbockes nach oben um eine horizontale Kippachse unmittelbar am Brüstungsquerträger die Pedale eine gegensinnige Schwenkbewegung um ihre Schwenkachse an dem wenigstens einen Lagerbock durchführen. Durch die erfindungsgemäße Lösung ist es möglich, ohne eine spezielle Formgestaltung der Stirnwand für die Pedale auch im Falle einer Deformation der Stirnwand im Fußraum eine Position beizubehalten, die keine Verletzungsgefahr für die Fahrer des Kraftfahrzeugs bietet. Die erfindungsgemäße Lösung hat sich die Erkenntnis zunutze gemacht, daß die Lagerbockeinheit für die Pedalanordnung unabhängig von dem jeweils eingesetzten Stirnwandkonzept immer eine Kippbewegung nach hinten und nach oben bei einer Deformation der Stirnwand durchführt. Durch das Vorsehen des Stützfortsatzes, der an der karosseriefesten Abgleitfläche bei einer Deformation der Stirnwand und einer daraus resultierenden Kippbewegung der Pedalanordnung entlanggleitet, wird gewährleistet, daß die Pedalanordnung diese Kippbewegung nicht mitmacht, sondern vielmehr mit ihren freien Stirnenden wenigstens in der Funktionsposition verbleibt, die sie vor einer Deformation der Stirnwand eingenommen hatte.

In Ausgestaltung der Erfindung sind die Abgleitfläche am Querträger und eine korrespondierende Stützfläche an dem jeweiligen Stützfortsatz derart auf die durch die Deformation der Stirnwand verursachte Kippbewegung des wenigstens einen Lagerbockes abgestimmt, daß die Beträge der durch die Kippbewegung einerseits und die gegensinnige Schwenkbewegung andererseits überstrichenen Winkel einander entsprechen. Dadurch wird gewährleistet, daß die Pedale auch bei einer Deformation der Stirnwand in etwa in ihrer Funktionsposition verbleiben.

In weiterer Ausgestaltung der Erfindung ist der Betrag des Winkels der Schwenkbewegung größer als der Winkelbetrag der Kippbewegung. Dadurch ist es möglich, die Pedale bei einer Deformation der Stirnwand sogar in Fahrtrichtung nach vorne zurückzuschwenken, so daß sie noch weiter aus der Gefährdungszone im Fußraum wegbewegt werden.

In weiterer Ausgestaltung der Erfindung ist die Abgleitfläche an einem sich quer durch den Fahrgastraum erstreckenden Cockpitquerträger vorgesehen. Dadurch wird ein ohnehin im Fahrzeug vorhandener Karosserieträger zur Anordnung der Abgleitfläche genutzt. Durch die deformationssteife Anordnung des Cockpitquerträgers auf Höhe von A-Säulen der Karosserietragstruktur ist der Cockpitquerträger bei Frontaufprallbelastungen von entsprechenden Deformationen selbst nicht betroffen, so daß er als stationär verbleibende Stütze die Abgleitfunktion übernehmen kann.

Weitere Vorteile und Merkmale der Erfindung ergeben sich aus den Unteransprüchen. Nachfolgend sind bevorzugte Ausführungsbeispiele der Erfindung beschrieben und anhand der Zeichnungen dargestellt.
- Fig. 1: zeigt schematisch einen Vorbaubereich einer Ausführungsform eines erfindungsgemäßen Kraftfahrzeugs auf Höhe einer Stirnwand, an der eine Pedalanordnung gelagert ist,
- Fig. 2: schematisch eine weitere Pedalanordnung für eine weitere Ausführungsform des erfindungsgemäßen Kraftfahrzeugs, wobei lediglich ein Bremspedal dargestellt ist und
- Fig. 3: den Ausschnitt des Kraftfahrzeugs nach Fig. 2, wobei lediglich ein Kupplungspedal dargestellt ist.

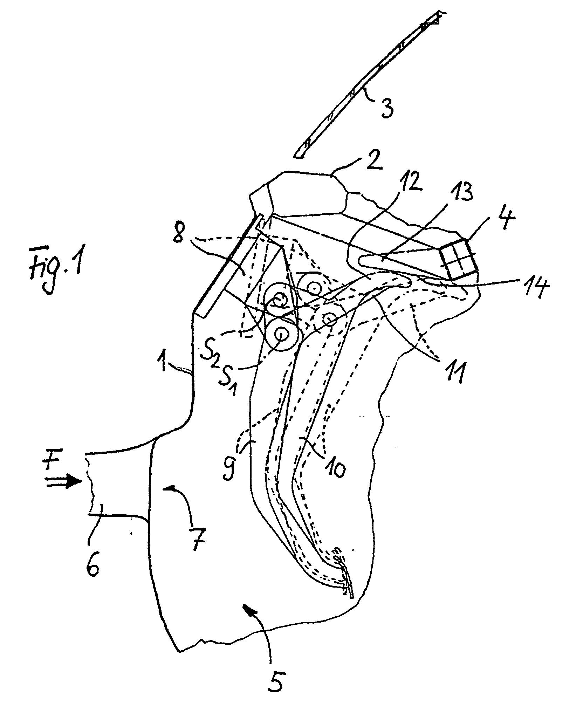

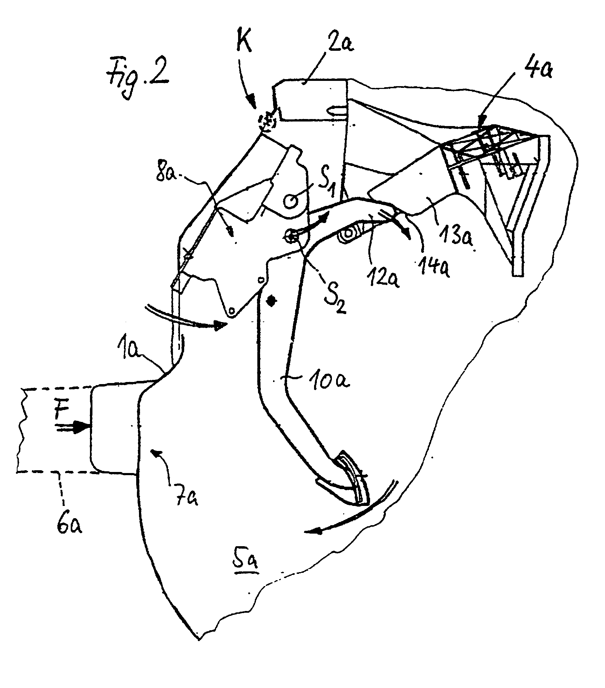

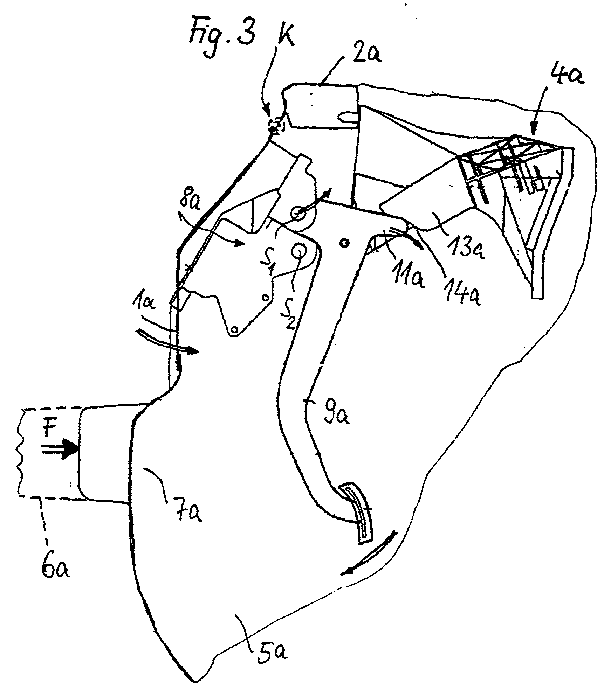

Ein Kraftfahrzeug in Form eines Personenkraftwagens weist in an sich bekannter Weise eine einen Motorraum von einem Fahrgastraum trennende Stirnwand 1 auf, die sich über die Fahrgastraumbreite erstreckt und seitlich an A-Säulen einer Karosserietragstruktur angebunden ist. Die Stirnwand 1 weist eine gewölbte Form auf und ist deformierbar gestaltet. Die Stirnwand 1 erstreckt sich ausgehend von einem Brüstungsquerträger 2, der unterhalb einer Windschutzscheibe 3 in Fahrzeugquerrichtung verläuft und stirnseitig kraftübertragend mit den beiden A-Säulen verbunden ist, bis in den Bereich eines Fußraumes 5 einer Fahrerseite des Fahrgastraumes nach unten. In normaler Fahrtrichtung nach vorne schließt dann die Stirnwand 1 in an sich bekannter Weise eine Vorbaustruktur an, die zwei Vorbaulängsträger 6 aufweist. Die Stirnwand 1 weist einen Anbindungsbereich 7 auf, in dem Frontalaufprallbelastungen, die zu einer Stauchung des fahrerseitigen Vorbaulängsträgers 6 führen, in die Stirnwand 1 eingeleitet werden. Die Anbindung des in Fahrtrichtung gesehen linken Vorbaulängsträgers 6 an die Stirnwand 1 ist sowohl beim Ausführungsbeispiel nach Fig. 1 als auch beim Ausführungsbeispiel nach den Figuren 2 und 3 lediglich schematisch dargestellt, um die Krafteinleitung F von Frontalaufprallbelastungen zu demonstrieren.

Im Abstand hinter der Stirnwand 1 - auf die normale Fahrtrichtung des Personenkraftwagens bezogen - erstreckt sich horizontal und quer durch den Fahrgastraum ein Cockpitquerträger 4, der beim dargestellten Ausführungsbeispiel als vierkantiges Hohlprofil gestaltet ist. Der Cockpitquerträger 4 ist auf seinen gegenüberliegenden Stirnseiten kraftübertragend mit den gegenüberliegenden A-Säulen der Karosserietragstruktur verbunden und ist ebenfalls wie der Brüstungsquerträger 2 deformationssteif gestaltet. Bei einem weiteren erfindungsgemäßen Ausführungsbeispiel ist ein Cockpitquerträger nicht mit den seitlichen A-Säulen, sondern über deformationssteife Trägerstützen direkt mit dem Brüstungsquerträger verbunden. Auch beim dargestellten Ausführungsbeispiel ist der Cockpitquerträger 4 ergänzend noch mittels wenigstens einer nicht näher bezeichneten Tragstütze mit dem Brüstungsquerträger 2 verbunden.

Unmittelbar unterhalb des Brüstungsquerträgers 2, jedoch mit Abstand oberhalb des Anbindungsbereiches 7, ist an der Stirnwand ein Lagerbock 8 für eine Pedalanordnung 9, 10 festgelegt, wobei das Pedal 9 ein Kupplungspedal und das Pedal 10 ein Bremspedal darstellen. Das Kupplungspedal 9 ist in nicht dargestellter, da an sich bekannter Weise, mittels eines Kupplungszuges mit einer Fahrkupplung verbunden. Das Bremspedal 10 steht in ebenfalls nicht näher dargestellter Weise mit einem Bremszylinder der Fahrzeugbremsen in Verbindung. Beide Pedale 9, 10 sind an dem gemeinsamen Lagerbock 8 schwenkbar gelagert, wobei die beiden Pedale 9, 10 hängend angeordnet sind und sich vom Lagerbock 8 aus in den Fußraum 5 nach unten erstrecken. Das eine Pedal 9 ist um eine Schwenkachse S₁ und das andere Pedal 10 um eine Schwenkachse S₂ schwenkbar am Lagerbock 8 gelagert, wobei beide Schwenkachsen S₁, S₂ sich parallel zueinander und jeweils horizontal in Fahrzeugquerrichtung erstrecken. Der Lagerbock 8 weist eine stabile Sockelplatte auf, die flächig an dem zugeordneten Befestigungsbereich der Stirnwand 1 festgelegt ist.

Sobald nun auf den Personenkraftwagen Frontalaufprallbelastungen ausgeübt werden, durch die entsprechende Aufprallkräfte F über den Vorbaulängsträger 6 in die fahrerseitige Hälfte der Stirnwand 1 auf Höhe des Anbindungsbereiches 7 eingeleitet werden, wird dieser Bereich der Stirnwand 1 in Fahrtrichtung nach hinten gedrückt. Da der deformationssteife Brüstungsquerträger 2 seine Position nicht ändert, wird durch das Nachinnendrücken der Stirnwand 1 zwangsläufig auch der Lagerbock 8 nach hinten und nach oben verschwenkt (gestrichelte Darstellung), wobei als imaginäre, horizontale und in Fahrzeugquerrichtung verlaufende Kippachse der biegeweiche Stirnwandbereich zwischen der Oberkante der Sockelplatte des Lagerbockes 8 und dem Brüstungsquerträger 2 dient.

Um zu verhindern, daß bei dieser Schwenkbewegung in Form einer Kippbewegung auch die Pedale 9, 10 zum Fahrersitz hin nach hinten - auf die normale Fahrtrichtung bezogen - verschwenkt werden, wodurch diese eine erhöhte Verletzungsgefahr darstellen würden, ist für die beiden Pedale 9, 10 ein nachfolgend näher beschriebenes Widerlager vorgesehen, das die Pedale 9, 10 trotz der Kippbewegung des Lagerbockes 8 zwangsgeführt wenigstens in ihrer Ursprungsposition zurückhält. Dazu weist jedes Pedal 9, 10 jeweils einen Stützfortsatz 11, 12 auf, der sich als einstückiger Fortsatz des jeweiligen Pedales 9, 10 von der jeweiligen Schwenkachse S₁, S₂ aus - in normaler Fahrtrichtung gesehen - radial schräg nach hinten und nach oben erstreckt. Beide Stützfortsätze 11, 12 weisen an ihrer Oberseite im Bereich ihres jeweiligen Stirnendes jeweils eine gekrümmte Stützfläche auf, die an einer korrespondierenden Abgleitfläche 14 einer Widerlagerstrebe 13 anliegen. Die Widerlagerstrebe 13 ist starr am Cockpitquerträger 4 angeordnet und erstreckt sich vom Cockpitquerträger 4 aus - in normaler Fahrtrichtung gesehen - in Richtung des Lagerbockes 8 nach vorne. Die Widerlagerstrebe 13 ist keilartig und deformationssteif gestaltet. Die Widerlagerstrebe 13 kann einen einstückigen Fortsatz des Cockpitquerträgers 4 darstellen. Die an der Unterseite der Widerlagerstrebe 13 vorgesehene Abgleitfläche 14 wie auch die korrespondierenden, gekrümmten Stützflächen der beiden Stützfortsätze 11, 12 sind derart aufeinander abgestimmt, daß die Pedale 9, 10 zumindest im Bereich ihrer unteren Stirnenden auch bei einer durch die gestrichelte Darstellung in Fig. 1 verdeutlichten Kippbewegung des Lagerbockes 8 in ihrer Ursprungsposition verbleiben. Wie aus Fig. 1 erkennbar ist, gleiten bei einer solchen Kippbewegung 8 die Stützfortsätze 11, 12 an der Abgleitfläche 14 der Widerlagerstrebe 12 entlang und bewirken dadurch für beide Pedale 9, 10 eine der Kippbewegung des Lagerbockes 8 gegensinnig entgegengerichtete Schwenkbewegung um die jeweilige Schwenkachse S₁, S₂. Beim dargestellten Ausführungsbeispiel erfolgt die Kippbewegung des Lagerbockes 8 im Gegenuhrzeigersinn, wohingegen die beiden Schwenkbewegungen der Pedale 9, 10 im Uhrzeigersinn verlaufen. Bei einem nicht dargestellten Ausführungsbeispiel der Erfindung ist das durch die Abgleitfläche am Cockpitquerträger und die beiden Stützfortsätze gebildete Widerlager für die Pedale derart gestaltet, daß eine entsprechende Kippbewegung des Lagerbockes zu einer Vorverlagerung der Pedale zur Stirnwand hin führt, wodurch die Pedale sogar teilweise aus dem Fußraum herausbewegt werden. Der Schwenkwinkel der Pedale ist bei dieser Ausführung somit größer als der gegensinnige Kippwinkel des Lagerbockes.

Das Ausführungsbeispiel nach den Figuren 2 und 3 entspricht im wesentlichen dem zuvor beschriebenen Ausführungsbeispiel nach Fig. 1, wobei funktionsgleiche Bauteile zum besseren Verständnis mit den gleichen Bezugszeichen unter jeweiliger Hinzufügung des Buchstabens a versehen wurden. Ein Unterschied des Ausführungsbeispiels nach den Figuren 2 und 3 zu den Ausführungsbeispielen nach Fig. 1 ist, daß die Stirnwand 1a auf Höhe des Anbindungsbereiches 7a mit einem nicht näher bezeichneten Querträgerprofilaufsatz versehen ist, der sich über die Breite der Stirnwand 1a erstreckt und in den die durch den Vorbaulängsträger 6a weitergeleiteten Aufprallkräfte F eingeleitet werden. Im übrigen erfolgen die Kipp- und Schwenkbewegungen des Lagerbockes 8a und der Pedale 9a, 10a entsprechend der Beschreibung zu Fig. 1, wobei zur ergänzenden Verdeutlichung in den Figuren 2 und 3 die imaginäre Kippachse K zwischen dem Brüstungsquerträger 2a und dem Lagerbock 8a durch die biegeweiche Gestaltung der Stirnwand 1a angedeutet ist. Auch die verschiedenen Kipp-, Schwenk- und Abgleitbewegungen sind durch entsprechende, mit Doppellinien dargestellte Pfeile verdeutlicht. Die Widerlagerstrebe 13a des Cockpitquerträgers 4a entspricht von ihrer Funktion her der Widerlagerstrebe 13 nach Fig. 1, wobei der Cockpitquerträger 4a als einstückiges Gußteil und auch die Widerlagerstrebe 13a als einstückiger Fortsatz gestaltet sind.

## Patentansprüche

1. Kraftfahrzeug mit zwei Vorbaulängsträgern (6,6a), die in einem Anbindungsbereich (7,7a) kraftübertragend mit einer deformierbaren Stirnwand (1,1a) verbunden sind, die sich von einem deformationssteifen Brüstungsquerträger (2,2a) unterhalb einer Windschutzscheibe (3,3a) bis in einen Fußraum (5,5a) eines Fahrgastraumes nach unten erstreckt, und mit einer Pedalanordnung, (9,9a,10,10a) deren Pedale mittels wenigstens eines Lagerbokkes (8,8a) schwenkbeweglich gelagert sind, wobei der wenigstens eine Lagerbock (8,8a) oberhalb des Anbindungsbereiches (7,7a) der Vorbaulängsträger (6,6a) stirnwandseitig festgelegt ist, sowie mit Mitteln zur gezielten Führung wenigstens eines Pedales bei (9,9a) einem Fahrzeugaufprall,
**dadurch gekennzeichnet,**
**daß** wenigstens ein Pedal (9, 10; 9a, 10a) mit einem - in normaler Fahrtrichtung gesehen - nach hinten abragenden Stützfortsatz (11, 12; 11a, 12a) versehen ist, der derart mit einer korrespondierenden Abgleitfläche (14; 14a) an einem in Abstand hinter dem wenigstens einen Lagerbock (8, 8a) angeordneten, karosseriefesten Querträger (4, 4a) in Wirkverbindung steht, daß bei einer Deformation der Stirnwand (1, 1a) und einer daraus resultierenden Kippbewegung des Lagerbockes (8, 8a) nach oben um eine horizontale Kippachse (K) unmittelbar am Brüstungsquerträger (2, 2a) die Pedale (9, 10; 9a, 10a) eine gegensinnige Schwenkbewegung ihrer Schwenkachse (S₁, S₂) an dem wenigstens einen Lagerbock (8, 8a) durchführen.

2. Kraftfahrzeug nach Anspruch 1,
**dadurch gekennzeichnet, daß**
die Abgleitfläche (14; 14a) am Querträger (4; 4a) und eine korrespondierende Stützfläche an dem jeweiligen Stützfortsatz (11, 12) derart auf die durch die Deformation der Stirnwand (1, 1a) verursachte Kippbewegung des wenigstens einen Lagerbockes (8, 8a) abgestimmt sind, daß die Beträge der durch die Kippbewegung einerseits und die gegensinnige Schwenkbewegung andererseits überstrichenen Winkel einander entsprechen.

3. Kraftfahrzeug nach Anspruch 1,
**dadurch gekennzeichnet, daß**
der Betrag des Winkels der Schwenkbewegung größer ist als der Winkelbetrag der Kippbewegung.

4. Kraftfahrzeug nach einem der vorhergehenden Ansprüche,
**dadurch gekennzeichnet, daß**
die Abgleitfläche (14, 14a) an einem sich quer durch den Fahrgastraum erstreckenden Cockpitquerträger (4, 4a) vorgesehen ist.

## Claims

1. Motor vehicle having two front-mounted longitudinal members (6, 6a), which are joined, in a join region (7, 7a), in a force-transmitting arrangement to a deformable front-end wall (1, 1a) extending from a deformation-resistant waist-level cross member (2, 2a) underneath a windscreen (3, 3a) down to a foot well (5, 5a) of a passenger compartment, and having a pedal arrangement, the pedals (9, 9a, 10, 10a) of which are pivotably mounted by means of at least one bearing block (8, 8a), the at least one bearing block (8, 8a) being fixed at the front wall end above the join region (7, 7a) of the front-mounted longitudinal members (6, 6a), and having means for selectively guiding at least one pedal (9, 9a) in the event of a vehicle impact,
**characterised in that**
at least one pedal (9, 10; 9a, 10a) is provided with a rearwardly projecting support projection (11, 12; 11a, 12a) - seen in the normal direction of travel - which is joined so as to co-operate with a corresponding deflection surface (14; 14a) on a cross member (4, 4a) fixed to the body work disposed at a distance behind the at least one bearing block (8, 8a) so that if the front wall (1, 1a) is deformed causing the bearing block (8, 8a) to pitch upwards about a horizontal pitch axis (K) directly on the waist-level cross member (2, 2a), the pedals (9, 10; 9a, 10a) effect a pivoting motion in the opposite direction about their pivot axis (S₁, S₂) on the at least one bearing block (8, 8a).

2. Motor vehicle as claimed in claim 1,
**characterised in that**
the deflection surface (14; 14a) on the cross member (4, 4a) and a corresponding support surface on the respective support projection (11, 12) are adapted to the pitching motion of the at least one bearing block (8, 8a) caused by the deformation of the front wall (1, 1a) so that the amounts of the angle travelled by the pitching motion on the one hand and the pivoting motion in the other direction on the other correspond to one another.

3. Motor vehicle as claimed in claim 1,
**characterised in that**
the amount of the angle of the pivoting motion is greater than the amount of the angle of the pitching motion.

4. Motor vehicle as claimed in one of the preceding claims,
**characterised in that**
the deflection surface (14, 14a) is provided on a cockpit cross member (4, 4a) extending through the passenger compartment.

## Revendications

1. Véhicule automobile comportant deux longerons (6, 6a) de structure avant, qui sont reliés, de manière à transmettre une force dans une zone de liaison (7, 7a) à une paroi avant déformable (1, 1a), qui s'étend depuis une traverse d'appui (2, 2a) résistante à la déformation, au-dessous d'un pare-brise (3, 3a), jusque dans un espace (5, 5a) pour les pieds dans un habitacle, et comportant un dispositif à pédales (9, 9a, 10, 10a), dont les pédales sont montées de manière à pouvoir pivoter à l'aide d'au moins un bloc de paliers (8, 8a), le au moins un bloc de paliers (8, 8a) étant fixé du côté de la paroi avant au-dessus de la zone de liaison (7, 7a) des longerons (6, 6a) de la structure avant, et comportant des moyens pour guider d'une manière ciblée au moins une pédale (9, 9a) dans le cas d'un choc appliqué au véhicule, **caractérisé en ce qu'**au moins une pédale (9, 10; 9a, 10a) est équipée d'un prolongement d'appui (11, 12; 11a, 12a) qui fait saillie vers l'arrière - vu dans la direction de déplacement normale -, qui coopère avec une surface correspondante de glissement (14, 14a) située sur une traverse (4, 4a) solidaire de la carrosserie et qui est disposée à distance en arrière du au moins un bloc de paliers (8, 8a), que dans le cas d'une déformation de la paroi avant (1, 1a) et d'un mouvement de basculement, qui en résulte, du bloc de paliers (8, 8a) vers le haut autour d'un axe horizontal de basculement (K), directement sur la traverse d'appui (2, 2a), les pédales (9, 10; 9a, 10a) exécutent un mouvement de basculement en sens opposé autour de leurs axes de pivotement (S₁, S₂), sur le au moins un bloc de paliers (8, 8a).

2. Véhicule automobile selon la revendication 1, **caractérisé en ce que** la surface de glissement (14; 14a) située sur la traverse (4; 4a) et une surface d'appui correspondante sur le prolongement respectif d'appui (11, 12) sont accordées sur le mouvement de basculement, provoqué par la déformation de la paroi avant (1, 1a) du au moins un bloc de paliers (8, 8a) de telle sorte que les valeurs absolues des angles parcourus d'une part lors du mouvement de basculement et d'autre part lors du mouvement de pivotement en sens opposé se correspondent.

3. Véhicule automobile selon la revendication 1, **caractérisé en ce que** la valeur absolue de l'angle du mouvement de pivotement est supérieure à la valeur absolue de l'angle du mouvement de basculement.

4. Véhicule automobile selon la revendication précédente, **caractérisé en ce que** la surface de glissement (14, 14a) est prévue sur un support transversal de cockpit (4, 4a) qui s'étend transversalement dans l'habitacle.
